# EUROPÄISCHE PATENTSCHRIFT

(11) **EP 1 714 929 B1**
(45) Veröffentlichungstag und Bekanntmachung des Hinweises auf die Patenterteilung: **04.06.2008**
(21) Anmeldenummer: 06111073.0
(22) Anmeldetag: 14.03.2006
(51) Int. Cl.: B65H 27/00, D21F 7/02, H02K 7/10

(54) **Walzenantrieb**
Roll drive
Entraînement de rouleau

(30) Priorität: 19.04.2005 DE 102005000037
(43) Veröffentlichungstag der Anmeldung: 25.10.2006
(73) Patentinhaber: Voith Patent GmbH, 89522 Heidenheim (DE)
(72) Erfinder: Stitz, Hermann Albert, 51515 Kürten (DE)
(74) Vertreter: Kunze, Klaus

(56) Entgegenhaltungen:
- EP-A- 1 331 306
- DE-A1- 10 153 895
- DE-A1- 10 319 105
- DE-A1- 19 509 288
- DE-A1- 19 614 936
- US-A- 5 442 248

## Beschreibung

Die Erfindung betrifft einen Antrieb für eine Walze einer Maschine zur Herstellung und/oder Bearbeitung einer laufenden Materialbahn, insbesondere einer Papier- oder Kartonbahn, wobei die anzutreibende Walze jeweils einen eigenen elektrischen Antriebsmotor mit einem Rotor und einem Stator aufweist, wobei als Antriebsmotor ein Synchronmotor vorgesehen ist, der im Inneren der betreffenden anzutreibenden Walze angeordnet ist.

Ein derartiges Antriebssystem für Wickelmaschinen ist in der DE-U-20209537 beschrieben.

Aus der EP-A2-1460010 ist der Direktantrieb eines Wickelkerns einer Wickelrolle mit einem Elektromotor, der vorzugsweise ein Synchronmotor ist, entnehmbar. Der besagte Elektromotor ist hierbei koaxial zur Wickelwalze angeordnet und an einen Drehantrieb gekoppelt.

Diese Bauweise und die Installation sind relativ aufwändig. Außerdem stören die Motore und Kupplungen die Peripherie der Maschine, in der die anzutreibenden Walzen sich befinden und nehmen unnötig viel Platz in Anspruch.

Weiterhin ist aus der deutschen Offenlegungsschrift DE 103 19 105 A1 ein Antrieb für eine Walze einer Maschine zur Herstellung und/oder Bearbeitung einer laufenden Materialbahn, insbesondere einer Papier- oder Kartonbahn, wobei die anzutreibende Walze jeweils einen eigenen elektrischen Antriebsmotor mit einem Rotor und einem Stator aufweist. Dabei ist als Antriebsmotor ein Synchronmotor vorgesehen, der im Inneren der betreffenden anzutreibenden Walze angeordnet ist.

Der Erfindung liegt daher die Aufgabe zugrunde, einen Walzenantrieb zu schaffen, mit dem die Nachteile des Standes der Technik vermeidbar sind.

Die Aufgabe der Erfindung wird mit den kennzeichnenden Merkmalen des Anspruches 1 gelöst.

Demgemäß Ist vorgesehen, dass die anzutreibende Walze im Wesentlichen hohl ausgebildet ist und einen durchgehenden Walzenmantel und stirnseitige Walzenzapfen aufweist, wobei die Walzenzapfen feststehend ausgebildet sind und den Stator des Synchronmotors und der drehbare Walzenmantel den Rotor des Synchronmotors bilden.

Dadurch wird neben einem torsionssteifen Antrieb auch ein höherer Wirkungsgrad der Maschine ermöglicht. Außerdem fallen die Montage- und Inbetriebnahmekosten geringer als bisher aus.

Eine zweckmäßige Ausgestaltung der Erfindung besteht darin, dass der Synchronmotor an einem stirnseitigen Ende der anzutreibenden Walze angeordnet ist. Vom Bedienpersonal ist dadurch eine gute Überwachung des Antriebes von einer Maschinenseite (Triebseite) aus möglich.

Eine weitere vorteilhafte Ausgestaltung besteht darin, dass der Walzenmantel über in der Walze eingebaute Radiallager, insbesondere Wälzlager, drehbar ist. Die Radiallager befinden sich jeweils an den stirnseitigen Enden der Walze. Der erfindungsgemäße Antrieb bzw. Motor benötigt dadurch kein eigenes Fundament zur Lagerung und braucht auch nicht aufwändig ausgerichtet zu werden, was einen weiteren Vorteil der Erfindung darstellt.

Je nach der Größe und der Drehzahl der anzutreibenden Walze ist es sinnvoll, wenn ein weiteres Radiallager sich auch an der von der ersten Stirnseite abgewandten Seite des Synchronmotors befindet. Dadurch können die Laufeigenschaften der Walze verbessert werden.

Nachzutragen ist, dass Mittel zur Schmierung der Lagerstellen der Walze in vorteilhafter Weise nicht notwenig sind, aber Mittel zur Kühlung des innen liegenden Synchronmotors lassen sich sehr einfach beispielsweise in den Walzenzapfen unterbringen.

Der erfindungsgemäße Antrieb lässt sich neben anderen anzutreibenden Zylindern und Walzen einer Herstellungs- oder Bearbeitungsmaschine einer laufenden Materialbahn besonders vorteilhaft für Tragwalzen und/ oder Andrückwalzen einer Wickelmaschine oder Walzen einer Rollenschneidmaschine verwenden, die bisher mit Drehstromasynchronmotoren angetrieben wurden.

Nachfolgend soll die Erfindung anhand eines Ausführungsbeispieles näher erläutert werden.

Es zeigt:

In den einzelnen Figuren sind gleiche Bauteile mit gleichem Bezugszeichen versehen oder ganz weggelassen, weil sie gegenüber der vorher erläuterten Figur selbsterklärend sind.
- **Figuren 1 bis 3:**: den Schnitt durch jeweils eine Walze mit der Anordung des erfindungsgemäßen Antriebs und Varianten der Lagerung
- **Figur 4:**: in perspektivischer, aber nur schematischer Darstellung ein Anwendungsbeispiel in Form einer Wickelmaschine, deren Tragwalzen und eine Andrückwalze mit einem erfindungsgemäßen Antrieb ausgerüstet sind

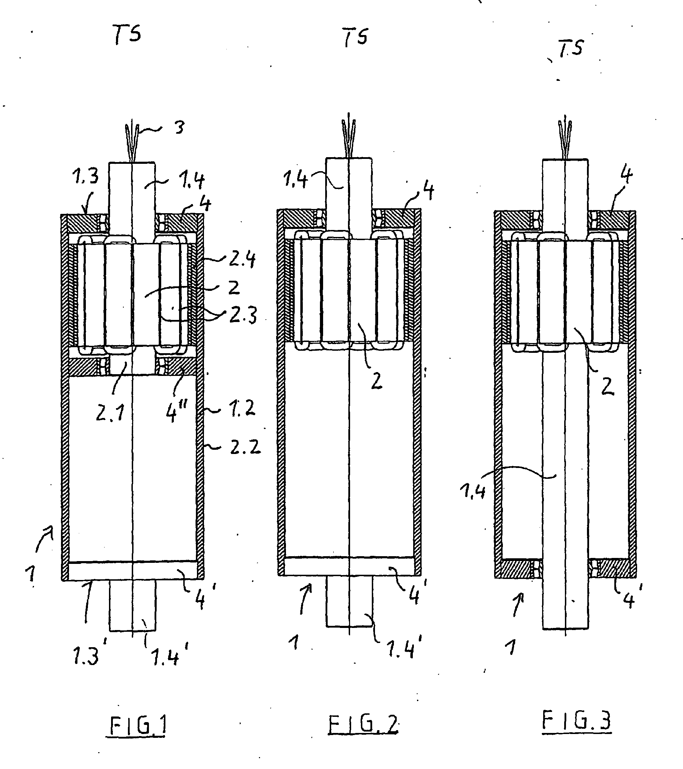

In **Figur 1** ist eine anzutreibende Walze1 im Schnitt dargestellt. Diese zylindrische Walze 1 ist im Wesentlichen hohl ausgebildet ist und kann deshalb einen für den Drehantrieb der Walze 1 vorgesehenen Synchronmotor 2 aufnehmen. Die Walze 1 weist einen durchgehenden rotierbaren Walzenmantel 1.2 und außerdem an ihrem stirnseitigen Ende 1.3 und 1.3.' jeweils einen Walzenzapfen 1.4 und 1.4' auf, der feststehend ausgebildet ist. Der Walzenzapfen 1.4 ist somit in der Lage zugleich den Stator 2.1 des eingebauten Synchronmotors 2 zu bilden. Eingelassen in den Walzenzapfen 1.4 sind zur Triebseite TS hin ragende elektrische Anschlusskabel 3 für den Betrieb des Synchronmotors 2. Die elektrischen Anschlusskabel 3 münden in eine Wicklung 2.3 des Synchronmotors.
An der Innenwandung des Walzenmantels 1.2 sind Permanentmagnete 2.4 (oder ein einzelner konzentrisch verlaufender) befestigt, die oder der bei der Beaufschlagung der Wicklungen mit elektrischen Strom die Drehbewegung der Walze 1 bewirken/bewirkt. Bei der Drehbewegung dreht sich also nur der Walzenmantel 1.2 über mehrere Radiallager 4, die sowohl auf den Walzenzapfen 1.4, als auch auf den gegenüberliegenden Walzenzapfen 1.4' aufgeschoben sind. Die Radiallager 4 sind hier eingekapselte Wälzlager, die schmierfrei sind.
Der Walzenmantel 1.2 ist durch seine beschriebene Drehbarkeit in der Lage, zugleich den Rotor 2.2 des Synchronmotors 2 zu bilden, wodurch insgesamt ein sehr kompakter, wartungs- und verschleißarmer und auch geräuscharmer Antrieb vorliegt.

**Figur 1** zeigt auch eine erste Variante der Anordnung der Lagerung des Walzenmantels 1.2. Dabei ist ein zusätzliches Radiallager 4" dargestellt, welches auf der vom stirnseitigen Ende 1.3 abgewandten Seite des Synchronmotors 2 liegt und wodurch eine hohe Stabilität und vor allem besonders gute Laufeigenschaften der Walze 1 gewährleistet werden.

In **Figur 2** ist eine zweite Variante der Anordnung des Radiallagers 4 dargestellt. Hierbei ist nur ein Radiallager 4 bzw. 4' vorgesehen, welches sich hier nur an den beiden stirnseitigen Ende 1.3 und 1.3' der Walze 1 befindet. Ansonsten bestehen keine weiteren Veränderungen gegenüber der Figur 1 und bedürfen deshalb keiner weiteren Erläuterung.

Die in **Figur 3** gezeigte dritte Variante weicht von der Ausführung gemäß Figur 2 nur dadurch ab, dass der Walzenzapfen 1.4 durchgehend ausgebildet ist. Es sind ebenfalls wie bei Figur 2 nur die beiden stirnseitigen Radiallager 4 bzw. 4' vorhanden. Diese Ausbildung ist bei sehr breiten Maschinen aus Stabilitätsgründen mit dementsprechend langen Walzen 1 vorgesehen.

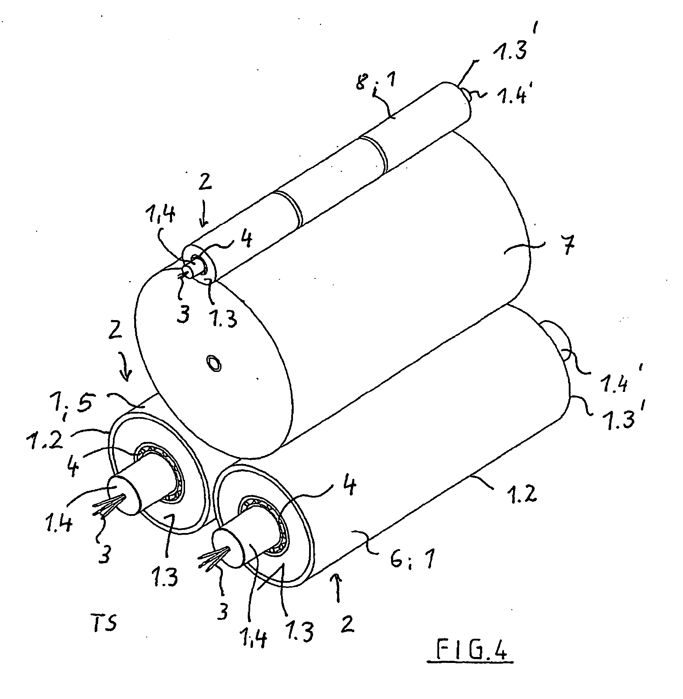

In der **Figur 4** ist eine Anwendungsmöglichkeit des erfindungsgemäßen Walzenantriebes gezeigt und beschrieben, bei der es sich im Beispiel um eine Wickelmaschine handelt.

Die Wickelmaschine weist zwei angetriebene Tragwalzen 5 und 6 auf, die ein Tragbett für eine Wickelrolle 7 beim Aufwickeln einer nicht mit dargestellten Materialbahn, insbesondere einer Bahn aus Papier oder Karton darstellt. Gezeigt ist auch eine Andrückwalze 8, mit der ein fester Wickel erreicht werden soll. Die aufzuwickelnde Materialbahn wird dadurch so gegen den Wickel gedrückt, dass mit der zu wickelnden Bahn eingeschleppte Luft abgequetscht wird. Die gezeigten Walzen 5, 6 und 8 entsprechen der Walze 1 aus den Figuren 1 bis 3 und weisen deshalb jeweils einen erfindungsgemäßen Antrieb bzw. Antriebsmotor in Form des an sich bekannten Synchronmotors 2 auf. Dieser Synchronmotor 2 ist jeweils im Inneren der betreffenden anzutreibenden Walze 5, 6, 8 eingebaut. Erkennbar sind in Figur 4 wieder jeweils die aus den Stirnseiten bzw. stirnseitigen Enden 1.3 der Walzen 5, 6. 8 ragende Walzenzapfen 1.4 und die Radiallager 4. Aus diesen Walzenzapfen 1.4 ragen wiederum zur Triebseite TS der Wickelmaschine hin die elektrischen Anschlusskabel 3, die jeweils von der hier nicht sichtbaren Wicklung 2.3 des ebenfalls nicht sichtbaren Synchronmotors 2 ausgehen.

### Bezugszeichenliste

- 1: Walze
- 1.2: Walzenmantel
- 1.3, 1.3': stirnseitiges Ende
- 1.4, 1.4': Walzenzapfen
- 2: Synchronmotor
- 2.1: Stator
- 2.2: Rotor
- 2.3: Wicklung
- 2.4: Permanentmagnet
- 3: elektrisches Anschlußkabel
- 4, 4', 4": Radiallager
- 5: Tragwalze
- 6: Tragwalze
- 7: Wickelrolle
- 8: Andrückwalze
- TS: Triebseite

## Patentansprüche

1. Antrieb für eine Walze einer Maschine zur Herstellung und/oder Bearbeitung einer laufenden Materialbahn, insbesondere einer Papier- oder Kartonbahn, wobei die anzutreibende Walze (1) jeweils einen eigenen elektrischen Antriebsmotor mit einem Rotor und einem Stator aufweist, wobei als Antriebsmotor ein Synchronmotor (2) vorgesehen ist, der im Inneren der betreffenden anzutreibenden Walze (1, 5, 6, 8) angeordnet ist,
**dadurch gekennzeichnet, dass**
die anzutreibende Walze (1, 5, 6, 8) im Wesentlichen hohl ausgebildet ist und einen durchgehenden Walzenmantel (1.2) und stirnseitige Walzenzapfen (1.4. 1.4') aufweist, wobei die Walzenzapfen (1.4, 1.4') feststehend ausgebildet sind und den Stator (2.1) des Synchronmotors (2) und der drehbare Walzenmantel (1.2) den Rotor (2.2) des Synchronmotors (2) bilden.

2. Antrieb nach Anspruch 1,
**dadurch gekennzeichnet, dass**
der Synchronmotor (2) an wenigstens einem stirnseitigen Ende (1.3) der anzutreibenden Walze (1, 5, 6, 8) angeordnet ist.

3. Antrieb nach Anspruch 1 oder 2,
**dadurch gekennzeichnet, dass**
der Walzenmantel (1.2) über an den stirnseitigen Enden (1.3) der Walze (1, 5, 6, 8) eingebaute Radiallager (4, 4'), insbesondere Wälzlager, drehbar ist.

4. Antrieb nach Anspruch 3,
**dadurch gekennzeichnet, dass**
ein weiteres Radiallager (4") sich auch an der von der ersten Stirnseite (1.3) abgewandten Seite des Synchronmotors (2) befindet.

5. Antrieb nach Anspruch 1 oder 2,
**dadurch gekennzeichnet, dass**
Mittel zur Kühlung des Synchronmotors (2) vorhanden sind.

6. Verwendung eines Antriebs nach einem der vorhergehenden Ansprüche in einer Tragwalze (5, 6) und/oder Andrückwalze (8) einer Wickelmaschine oder in einer Walze einer Rollenschneidmaschine.

## Claims

1. Drive for a roll for a machine for producing and/or processing a moving material web, in particular a paper or board web, the roll (1) to be driven in each case having an individual electric drive motor with a rotor and a stator, the drive motor provided being a synchronous motor (2) which is arranged in the interior of the relevant roll (1, 5, 6, 8) to be driven,
**characterized in that** the roll (1, 5, 6, 8) to be driven is substantially hollow and has a continuous roll shell (1.2) and roll journals (1.4, 1.4') at the ends, the roll journals (1.4, 1.4') being stationary and forming the stator (2.1) of the synchronous motor (2), and the rotatable roll shell (1.2) forming the rotor (2.2) of the synchronous motor (2).

2. Drive according to Claim 1, **characterized in that** the synchronous motor (2) is arranged at at least one end (1.3) of the roll (1, 5, 6, 8) to be driven.

3. Drive according to Claim 1 or 2, **characterized in that** the roll shell (1.2) can be rotated via radial bearings (4, 4'), in particular antifriction bearings, incorporated at the ends (1.3) of the roll (1, 5, 6, 8).

4. Drive according to Claim 3, **characterized in that** a further radial bearing (4") is also located on the side of the synchronous motor (2) facing away from the first end side (1.3).

5. Drive according to Claim 1 or 2, **characterized in that** there are means for cooling the synchronous motor (2).

6. Use of a drive according to one of the preceding claims in a carrier roll (5, 6) and/or pressure roll (8) of a winder or in a roll of a slitter-winder.

## Revendications

1. Entraînement pour un rouleau d'une machine de fabrication et/ou de traitement d'une nappe de matériau en mouvement, en particulier d'une nappe de papier ou de carton, dans lequel le rouleau (1) à entraîner présente un moteur d'entraînement électrique propre avec un rotor et un stator, un moteur synchrone (2) étant prévu en tant que moteur d'entraînement et étant disposé à l'intérieur du rouleau en question à entraîner (1, 5, 6, 8),
**caractérisé en ce que**
le rouleau à entraîner (1, 5, 6, 8) est réalisé sous forme essentiellement creuse et présente une enveloppe de rouleau continue (1.2) et des tourillons de rouleau frontaux (1.4, 1.4'), les tourillons de rouleau (1.4, 1.4') étant réalisés sous forme fixe et formant le stator (2.1) du moteur synchrone (2), et l'enveloppe rotative du rouleau (1.2) formant le rotor (2.2) du moteur synchrone (2).

2. Entraînement selon la revendication 1,
**caractérisé en ce que**
le moteur synchrone (2) est disposé sur au moins une extrémité frontale (1.3) du rouleau à entraîner (1, 5, 6, 8).

3. Entraînement selon la revendication 1 ou 2,
**caractérisé en ce que**
l'enveloppe du rouleau (1.2) peut tourner sur des paliers radiaux (4, 4') incorporés aux extrémités frontales (1.3) du rouleau (1, 5, 6, 8), en particulier des paliers à roulement.

4. Entraînement selon la revendication 3,
**caractérisé en ce**
**qu'**un palier radial supplémentaire (4") se trouve également sur le côté du moteur synchrone (2) opposé au premier côté frontal (1.3).

5. Entraînement selon la revendication 1 ou 2,
**caractérisé en ce que**
l'on prévoit des moyens pour refroidir le moteur synchrone (2).

6. Utilisation d'un entraînement selon l'une quelconque des revendications précédentes, dans un rouleau de support (5, 6) et/ou un rouleau de pression (8) d'une bobineuse ou dans un rouleau d'une machine de découpage rotative.
